# EUROPÄISCHE PATENTSCHRIFT

(11) **EP 2 566 719 B1**
(45) Veröffentlichungstag und Bekanntmachung des Hinweises auf die Patenterteilung: **18.12.2013**
(21) Anmeldenummer: 11721708.3
(22) Anmeldetag: 27.04.2011
(51) Int. Cl.: B60N 2/12, B60N 2/20, B60N 2/22

(54) **BESCHLAG FÜR EINEN FAHRZEUGSITZ**
FITTING FOR A VEHICLE SEAT
FERRURE POUR UN SIÈGE DE VÉHICULE

(30) Priorität: 05.05.2010 DE 102010019697
(43) Veröffentlichungstag der Anmeldung: 13.03.2013
(73) Patentinhaber: Keiper GmbH & Co. KG, 67657 Kaiserslautern (DE)
(72) Erfinder: LEHMANN, Ulrich, 53347 Alfter (DE); VOSS, Heinz, 51375 Leverkusen (DE); THIEL, Peter, 42899 Remscheid (DE)
(74) Vertreter: Liedhegener, Ralf
(86) Internationale Anmeldenummer: PCT/EP2011/002113
(87) Internationale Veröffentlichungsnummer: WO 2011/137989

(56) Entgegenhaltungen:
- DE-A1-102008 017 019
- DE-U1-202008 005 523

## Beschreibung

Die Erfindung betrifft einen Beschlag für einen Fahrzeugsitz mit den Merkmalen des Oberbegriffs des Anspruches 1.

Ein Beschlag dieser Art ist aus der US 7,571,962 B2 bekannt. Das erste Beschlagteil und das zweite Beschlagteil stehen miteinander in Getriebeverbindung, um die Neigung der Lehne einzustellen. Auf einem am ersten Beschlagteil befestigten Lagerring ist das dritte Beschlagteil schwenkbar gelagert. Ferner sitzt ein separat ausgebildetes Rastelement auf dem Lagerring und ist an diesem befestigt, so dass es fest mit dem ersten Beschlagteil verbunden ist. Eine am dritten Beschlagteil schwenkbar gelagerte, gezahnte Klinke verriegelt mit dem Rastelement, welches hierzu in einem radial abstehenden Bereich ebenfalls gezahnt ist. Wird die Klinke geöffnet, ist die Lehne freischwenkbar.

Ein ähnlicher Beschlag ist aus der DE 10 2008 017 019 A1 bekannt. Das erste Beschlagteil und das zweite Beschlagteil stehen miteinander in Getriebeverbindung, um die Neigung der Lehne einzustellen. Der Umklammerungsring übergreift das zweite Beschlagteil und ist fest mit dem ersten Beschlagteil verbunden, wobei sie gemeinsam eine Nase ausbilden, welche einen von der ansonsten kreisrunden Grundform radial abstehenden Bereich darstellt. Ein drittes Beschlagteil ist relativ zum ersten Beschlagteil schwenkbar gelagert. Ein am dritten Beschlagteil vorgesehener bolzenförmiger Anschlag und ein am dritten Beschlagteil schwenkbar gelagerter, vorgespannter Riegel nehmen die Nase zwischen sich auf und verriegeln so das dritte Beschlagteil mit dem ersten Beschlagteil. Wird der Riegel geöffnet, ist die Lehne freischwenkbar.

Aus der DE 20 2008 005 523 U 1 ist ein gattungsgemäßer Beschlag bekannt, der ein Rastelement aufweist, dass einstückig mit dem ersten Beschlagteil in dessen radial äußerem Bereich verbunden ist. Der Außendurchmesser des ersten Beschlagteils muss deutlich größer sein als dessen Zahnkranzdurchmesser, damit die Zahnfüße des Rastelements nicht mit den Zahnköpfen des Zahnkranzes kollidieren.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem das gezahnte Rastelement am ersten Beschlagteil angeformt ist und die Gegenverzahnung des geprägten Zahnkranzes des ersten Beschlagteils auf dessen Kehrseite als Rastelement dient, wird ein Bauteil (separates Rastelement) eingespart, also Gewicht und Kosten reduziert. Dies wird begünstigt durch eine vorzugsweise im wesentlichen flache Form des Umklammerungsrings, welcher das erste Beschlagteil nicht mehr vollständig übergreift, wobei gegenüber der bekannten L-förmig profilierten Ausbildung des Umklammerungsrings auch weniger Material benötigt wird, was zu weiteren Einsparungen von Gewicht und Kosten führt. Gegenüber einfachen Riegeln erhöhen eine gezahnte Klinke und ein gezahntes Rastelement die Festigkeit der Verriegelung. Für eine weitere Erhöhung des Festigkeit der gezahnten Klinke können deren Zähne derart geprägt sein, also spanlos umgeformt sein, dass die Zahnlücken in axialer Richtung allenfalls teilweise ausgebildet sind, d.h. nicht ausgeschnitten und über die gesamte Materialstärke ausgebildet sind. Die Zähne sind somit (einseitig) miteinander im Bereich ihrer Zahnköpfe miteinander verbunden. Entsprechendes gilt für das Rastelement.

Das angeformte Rastelement ist durch eine bereits vorhandene Materialpartie und nicht durch eine eigens ausgebildete Materialpartie realisiert, nämlich durch die bereits vorhandene Gegenverzahnung auf der Kehrseite des Zahnkranzes eines Exzenterumlaufgetriebes. Diese Gegenverzahnung bildet sich automatisch beim Prägen des Zahnkranzes (auf dessen Kehrseite), wofür die entsprechenden Bereiche des ersten Beschlagteils spanlos umgeformt werden.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

Der Grundanteil beim Sperren des Exzenterumlaufgetriebes wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die vorzugsweise vorgesehenen Keilsegmente, welche den Exzenter definieren, dienen sowohl dem Sperren als auch dem Antreiben der Abwälzbewegung von Zahnrad und Zahnkranz. Ein vorzugsweise vorgesehenes Sperrelement dient dem Sperren des Beschlags unter dynamischen Belastungen.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann (welches dann der am ersten Beschlagteil befestigte Umklammerungsring übergreift) und trotzdem ausreichend große Verbindungsbereiche am zweiten Beschlagteil zur Montage des Beschlags zur Verfügung stehen.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere Fahrzeugsitze verwendet werden.

Im folgenden ist die Erfindung anhand eines in der Zeichnung dargestellten Ausführungsbeispiels näher erläutert. Es zeigen
- Fig. 1: einen Schnitt durch einen Beschlag gemäß dem ersten Ausführungsbeispiel ohne Federn und Mitnehmer,
- Fig. 2: eine Explosionsdarstellung des Beschlags von Fig. 1,
- Fig. 3: einen Schnitt durch einen Beschlag gemäß einem nicht zur Erfindung gehörenden Ausführungsbei-spiel ohne Federn und Mitnehmer,
- Fig. 4: eine Ansicht einer abgewandelten Klinke,
- Fig. 5: eine Explosionsdarstellung der scheibenförmigen Einheit des Beschlags mit den darin enthaltenen Bauteilen,
- Fig. 6: eine schematische Darstellung eines Fahrzeugsitzes, und
- Fig. 7: eine Abwandlung eines nicht zur Erfindung gehörenden Ausführungsbeispiels.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 A beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder (in Umfangsrichtung wenigstens teilweise) umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern, d.h. der Umklammerungsring 13 und das mit ihm fest verbundene Beschlagteil 11 oder 12 umklammern das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 steht das erste Beschlagteil 11 in Verbindung mit der Lehne 4. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 stünde in Verbindung mit der Lehne 4. Der Beschlag 10 liegt also im Kraftfluss zwischen Lehne 4 und Sitzteil 3, weshalb die beiden Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 111 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C 1 offenbart ist. Die Sperrfeder 51 wirkt vorliegend mit einer Verzahnung 55 zusammen, die als weiterer Zahnkranz am ersten Beschlagteil 11 ausgebildet ist. Die Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

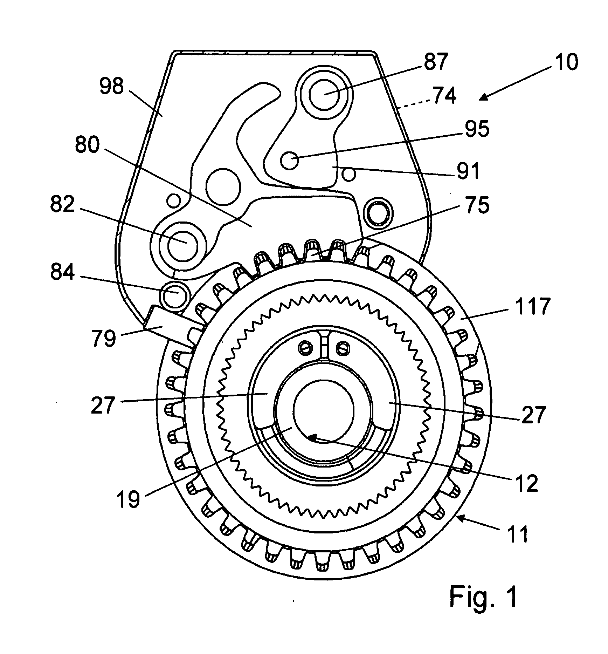

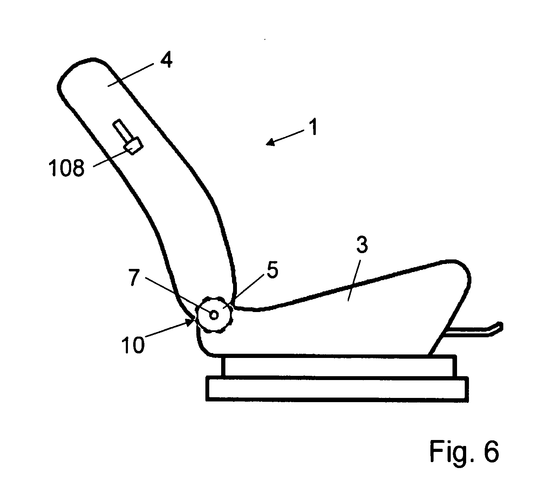

Jeder Beschlag 10 umfasst außer der besagten scheibenförmigen Einheit und den darin enthaltenen Bauteilen noch eine Freischwenkvorrichtung. Am ersten Beschlagteil 11 ist auf dessen vom zweiten Beschlagteil 12 abgewandten Seite, beispielsweise mittels eines am ersten Beschlagteil 11 befestigten Lagerrings 71, ein drittes Beschlagteil 74 gelagert. Das plattenförmige dritte Beschlagteil 74 ist mit der Lehnenstruktur der Lehne 4 verbunden ("lehnenfest") und für das zentrisch erfolgende Freischwenken relativ zum ersten Beschlagteil 11 um eine (durch den Lagerring 71 definierte) zentrale Achse A schwenkbar. Beim Gebrauch des Fahrzeugsitzes 1 ist das dritte Beschlagteil 74 mit dem ersten Beschlagteil 11 verriegelt, und zwar mit einem am ersten Beschlagteil 11 vorgesehenen Rastelement 75. Ein Anschlag 79 am ersten Beschlagteil 11 ist zur Begrenzung der Schwenkbewegung des dritten Beschlagteils 74 in Rückwärts-Schwenkrichtung der Lehne 2 (in Fig. 1, 2, 3 und 6 gegen den Uhrzeigersinn) wirksam, also im Normalfall zur Wiederherstellung der Gebrauchsstellung der Lehne 4 nach Beendigung des Freischwenkens als auch vorzugsweise im Heck-Crashfall. Das Freischwenken, welches dem erleichterten Zugang der nächsten Sitzreihe dient, kann zugleich ein Übergang in eine Tischstellung mit näherungsweise horizontaler Lehne 4 sein, was die Lademöglichkeiten verbessert.

Eine Klinke 80 ist mittels eines Lagerbolzens 82 schwenkbar am dritten Beschlagteil 74 auf der dem ersten Beschlagteil 11 (und dem Rastelement 75) zugewandten Seite gelagert. Um das dritte Beschlagteil 74 zu verriegeln, steht die gezahnte Klinke 80 mit dem ebenfalls gezahnten Rastelement 75 in Eingriff. Der Lagerbolzen 82 ist vorzugsweise als Exzenterbolzen ausgebildet, d.h. er ist um eine zur Schwenkachse der Klinke 80 versetzte Achse im dritten Beschlagteil 74 relativ zu diesem drehbar gelagert. Zum Ausgleich der Fertigungstoleranzen ist der Lagerbolzen 82 so eingestellt und fixiert, dass die Klinke 80 mit einen maximalem Klinkeneingriff spielfrei mit dem Rastelement 75 in Eingriff steht, allerdings außerhalb des Winkelbereichs der Selbsthemmung. Mit dem Anschlag 79 wirkt ein Gegenanschlag 84 am dritten Beschlagteil 74 zusammen. Als Gegenanschlag 84 ist vorzugsweise ein Bolzen vorgesehen, der alternativ oder kummulativ zum Lagerbolzen 82 als Exzenterbolzen ausgebildet kann sein. Parallel zum Lagerbolzen 82 ist im dritten Beschlagteil 74, beispielsweise mittels einer Lagerbuchse, ein Achsstummel 87 angeordnet, mittels dessen ein Sicherungselement 91 relativ zum dritten Beschlagteil 74 drehbar gelagert ist. Das Sicherungselement 91 ist mittels einer Sicherungsfeder 95 in Richtung der Klinke 80 vorgespannt, um deren Zusammenwirken mit dem Rastelement 75 zu sichern. Vom Sicherungselement 91 steht ein Entriegelungsbolzen 95 ab, welcher parallel zum Achsstummel 87 durch eine Öffnung im dritten Beschlagteil 74 ragt und so von außen zugänglich ist. Ein am dritten Beschlagteil 74 befestigter Deckel 98 deckt die vorgenannten Einzelteile der Freischwenkvorrichtung - wenigstens teilweise - ab und schützt diese vor Verschmutzung.

Eine Bewegung des Entriegelungsbolzens 95, welcher beispielsweise mittels eines Hebels und eines Seilzuges mit einem Handhebel 108 an der Lehne 4 in Wirkverbindung steht, schwenkt das Sicherungselement 91 auf. Mittels der Schwenkbewegung gibt das Sicherungselement 91 die Klinke 80 frei. Vorzugsweise kommt das Sicherungselement 91 dabei in Anlage an einen Entriegelungsfinger der Klinke 80 und zieht diese dadurch auf bzw. unterstützt diese beim Öffnen. Die Klinke 80 ist damit vollständig geöffnet, und das dritte Beschlagteil 74 ist entriegelt. Die Lehne 4 kann freigeschwenkt werden. Das Freischwenken wird in die Vorwärts-Schwenkrichtung der Lehne 4 (in Fig. 1, 2, 3 und 6 im Uhrzeigersinn) vorzugsweise durch einen mit dem zweiten Beschlagteil 12 fest verbundenen Sperranschlag begrenzt, den beispielsweise zwei Begrenzungsanschläge des dritten Beschlagteils 74 zwischen sich aufnehmen. Der Sperranschlag kann auch den Einstellbereich bei der Neigungseinstellung begrenzen, d.h. die relative Verdrehung des ersten Beschlagteils 11 und des zweiten Beschlagteils 12.

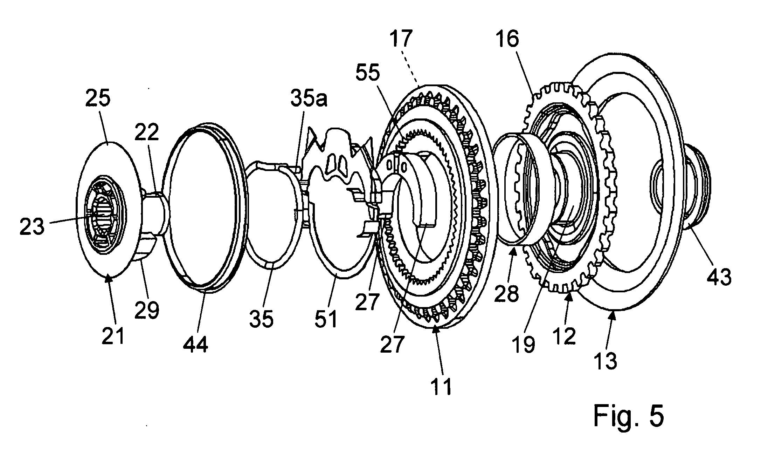

Erfindungsgemäß ist das Rastelement 75 am ersten Beschlagteil 11 angeformt, d.h. es bildet einen einstückigen Bestandteil desselben in stofflicher Einheit und ist kein separat hergestelltes, nachträglich befestigtes Bauteil. Vorzugsweise ist auch der Anschlag 79 am ersten Beschlagteil 11 (oder am Umklammerungsring 13 oder am Lagerring 71) angeformt. Die erfindungsgemäße Lösung wird begünstigt durch einen Umklammerungsring mit einer im wesentlichen flachen Form, wie in Fig. 5 dargestellt, der das erste Beschlagteil 11 allenfalls stellenweise übergreift und so auch am Rand des ersten Beschlagteils 11 radial abstehende Materialpartien ermöglicht. Es sind verschiedene Ausführungen für das Rastelement 75 möglich.

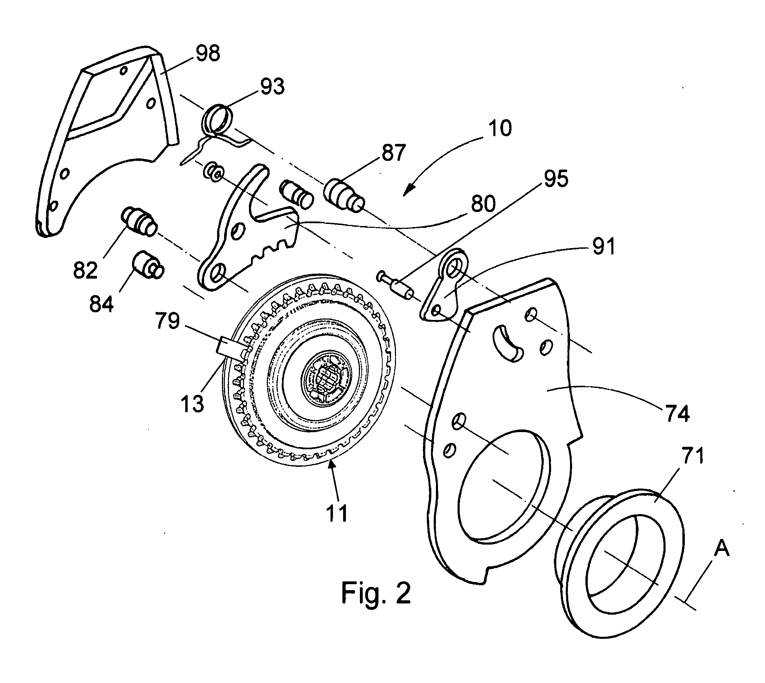

In erfindungsgemäßem Ausführungsbeispiel (Fig. 1, 2) dient die Gegenverzahnung des geprägten Zahnkranzes 17 auf dessen Kehrseite als Rastelement 75. Entsprechend weist die Klinke 80 dazu passende Zähne auf. Als Anschlag 79 kann ein separates Bauteil, welches am ersten Beschlagteil 11 befestigt ist, beispielsweise vorliegend formschlüssig an der Gegenverzahnung des Zahnkranzes 17 angesetzt und mit dem ersten Beschlagteil 11 verschweißt ist, oder eine angeformte, vom ersten Beschlagteil 11 (oder vom Umklammerungsring 13 oder vom Lagerring 71) radial abstehende Materialpartie dienen. In der Vorwärts-Schwenkrichtung der Lehne 4 benachbart zu dem als Rastelement 75 dienenden Bereich der Gegenverzahnung des Zahnkranzes 17 ist optional ein Füllstück 117 vorgesehen, welches sich in Umfangsrichtung über einen Teilbereich der Gegenverzahnung des Zahnkranzes 17 erstreckt. Das Füllstück 117 schließt in diesem Teilbereich die Zähne der Gegenverzahnung des Zahnkranzes 17, indem es zwischen sie greift, und verhindert so ein Verriegeln der Klinke 80 mit der Gegenverzahnung des Zahnkranzes 17 während des Übergangs in die freigeschwenkte Stellung. Das Füllstück 117 ist vorzugsweise aus Kunststoff ausgebildet und auf das erste Beschlagteil 11 vorzugsweise aufgeclipst, oder ein angeschweißtes Metallteil. Die Klinke 80 kann prinzipiell in Umfangsrichtung hinter dem Füllstück 117 wieder in die Gegenverzahnung des Zahnkranzes 17 einfallen, so dass eine Sicherung der freigeschwenkten Stellung geschaffen werden kann.

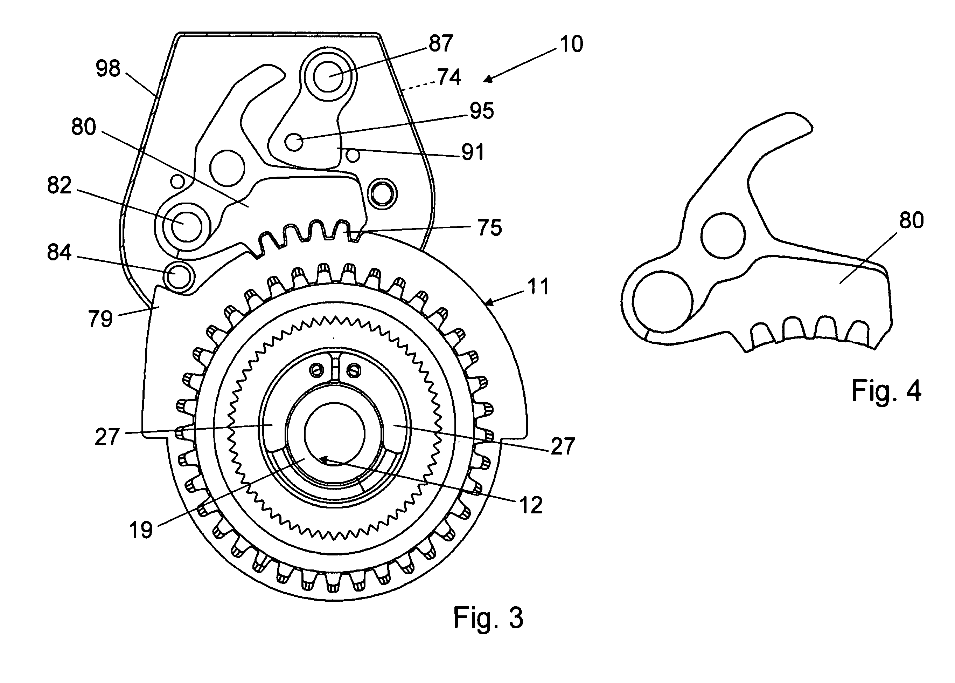

In einem nicht zur Erfindung gehörenden Ausführungsbeispiel (Fig. 3) ist das Rastelement 75 radial außen am ersten Beschlagteil 11 angeformt, d.h. als eine radial abstehende Materialpartie, wobei in dieser Materialpartie eine mit der Klinke 80 zusammenwirkende Verzahnung ausgebildet ist. In gleicher Weise ist der Anschlag 79 radial außen am ersten Beschlagteil angeformt, vorliegend als eine radial abstehende Materialpartie. Die radiale Abmessung der besagten Materialpartien, um welche sie gegenüber der Grundform des ersten Beschlagteils 11 abstehen, ist klein gegen den Durchmesser des ersten Beschlagteils 11, so dass das erste Beschlagteil 11 und das zweite Beschlagteil 12 weiterhin zusammen (mit dem Umklammerungsring 13) eine scheibenförmige Einheit bilden.

Zu den beiden Ausführungsbeispielen sind weitere Abwandlungen möglich. So können der Achsstummel 87 und der Entriegelungsbolzen 95 miteinander fluchtend und einstückig als eine drehbar im dritten Beschlagteil 74 gelagerte Welle ausgebildet sein, wie beispielsweise in der DE 10 2006 044 489 A1 beschrieben, deren diesbezüglicher Offenbarungsgehalt ausdrücklich einbezogen wird. In einer weiteren Abwandlung können anstelle eines einzigen Sicherungselementes 91 auch ein Fangelement für die Abstützung der Klinke im Crashfall und ein Spannelement für die Sicherung der Klinke im Normalfall vorgesehen sein, wie sie beispielsweise ebenfalls in der genannten DE 10 2006 044 489 A1 oder in der DE 44 39 644 A1 beschrieben sind, deren diesbezüglicher Offenbarungsgehalt ausdrücklich einbezogen wird. Die Zähne der Klinke 80 können in einer Abwandlung (Fig. 4) geprägt (herausgestellt) sein, d.h. auf der dem Rastelement 75 zugewandten Seite der Klinke 80 durch spanlose Umformung (wie beim Zahnkranz 17) ausgebildet sein. Dies erhöht die Festigkeit der Klinke 80 und erlaubt geringere Zahnbreiten. Die Klinke 80 kann in abgewandelter Ausführung einen einzigen Zahn aufweisen, der beispielsweise tangential zum Lagerbolzen 82 von der Klinke 80 absteht. Auch das Rastelement 75 kann einen einzigen Zahn oder eine einzige Zahnlücke aufweisen. Der Anschlag 79 und der Gegenanschlag 84 können in einer weiteren Abwandlung als (Paare von) Anschlagnocken ausgebildet sein, wie beispielsweise in der DE 10 2008 029 438 A1 beschrieben, deren diesbezüglicher Offenbarungsgehalt ausdrücklich einbezogen wird.

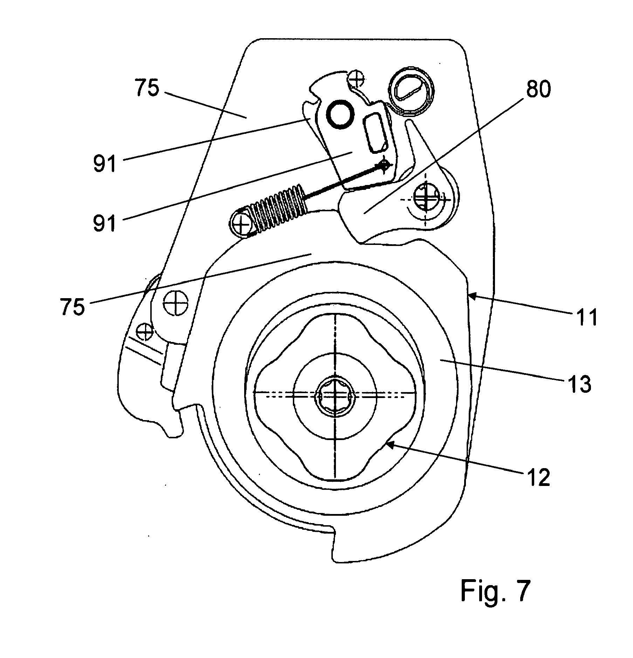

In Fig. 7 ist eine dieser Abwandlungen, und zwar des nicht zur Erfindung gehörenden Ausführungsbeispiels, dargestellt. Am ersten Beschlagteil 11 ist ein flacher Umklammerungsring 13 befestigt, welcher das zweite Beschlagteil 12 übergreift. Das dritte Beschlagteil 74 ist am ersten Beschlagteil 11 schwenkbar gelagert, vorliegend mittels des Lagerring 71. Das am ersten Beschlagteil 11 angeformte Rastelement 75 ist durch eine radial abstehende Materialpartie des ersten Beschlagteils 11 definiert und weist eine einzige Zahnlücke auf. Die am dritten Beschlagteil 74 schwenkbar gelagerte Klinke 80 weist einen einzigen Zahn auf, welcher an einer Flanke der (unsymmetrischen) Zahnlücke anliegt, wenn um das dritte Beschlagteil 74 zu verriegeln. Die Klinke 80 wird dabei durch zwei Sicherungselemente 91 gesichert, nämlich einem Fangelement für die Abstützung der Klinke 80 im Crashfall und einem Spannelement für die Sicherung der Klinke 80 im Normalfall. Eine ähnliche Freischwenkvorrichtung, aber mit einem separat ausgebildeten Rastelement 75, ist beispielsweise in der DE 20 2008 011 680 U 1 oder der DE 10 2009 056 154 A1 beschrieben, deren diesbezüglicher Offenbarungsgehalt ausdrücklich einbezogen wird.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 51: Sperrfeder
- 55: Verzahnung
- 71: Lagerring
- 74: drittes Beschlagteil
- 75: Rastelement
- 79: Anschlag
- 80: Klinke
- 82: Lagerbolzen
- 84: Gegenanschlag
- 87: Achsstummel
- 91: Sicherungselement
- 93: Sicherungsfeder
- 95: Entriegelungsbolzen
- 98: Deckel
- 108: Handhebel
- 117: Füllstück
- A: Achse

## Patentansprüche

1. Beschlag für einen Fahrzeugsitz, insbesondere für einen Kraftfahrzeugsitz, mit
a) einem ersten Beschlagteil (11) und einem zweiten Beschlagteil (12), welche relativ zueinander verdrehbar sind und miteinander in Getriebeverbindung stehen,
b) einem Umklammerungsring (13), welcher das erste Beschlagteil (11) und das zweite Beschlagteil (12) axial zusammenhält unter Bildung einer scheibenförmigen Einheit, und welcher am ersten Beschlagteil (11) befestigt ist und das zweite Beschlagteil (12) radial außen übergreift, und
c) einem dritten Beschlagteil (74), welches relativ zum ersten Beschlagteil (11) schwenkbar gelagert und welches mittels einer gezahnten Klinke (80) mit einem am ersten Beschlagteil (11) vorgesehenen Rastelement (75) verriegelbar ist, wobei
d) das gezahnte Rastelement (75) am ersten Beschlagteil (11) angeformt ist und
e) das erste Beschlagteil (11) und das zweite Beschlagteil (12) miteinander in Getriebeverbindung stehen mittels eines am ersten Beschlagteil (11) ausgebildeten Zahnkranzes (17) und eines am zweiten Beschlagteil (12) ausgebildeten Zahnrades (16), die miteinander kämmen,
**dadurch gekennzeichnet, dass**
f) die Gegenverzahnung des geprägten Zahnkranzes (17) auf dessen Kehrseite als Rastelement (75) dient.

2. Beschlag nach Anspruch 1, **dadurch gekennzeichnet, dass** ein von einem Mitnehmer (21) angetriebener, umlaufender Exzenter (27, 27) zum Antrieb einer relativen Abwälzbewegung von Zahnrad (16) und Zahnkranz (17) vorgesehen ist, wobei insbesondere zwei von einer Feder (35) beaufschlagte Keilsegmente (27) den Exzenter (27, 27) definieren.

3. Beschlag nach Anspruch 2, **dadurch gekennzeichnet, dass** das erste Beschlagteil (11) den Exzenter (27, 27) aufnimmt, insbesondere mittels einer zum Zahnkranz (17) konzentrischen Gleitlagerbuchse (28), und dass das zweite Beschlagteil (12) den Exzenter (27, 27) abstützt, insbesondere mittels eines zum Zahnrad (16) konzentrischen Kragens (19).

4. Beschlag nach einem der vorhergehenden Ansprüche, **dadurch gekennzeichnet, dass** in Umfangsrichtung über einen Teilbereich der Gegenverzahnung des Zahnkranzes (17) ein Füllstück (117) vorgesehen ist, welches ein Verriegeln der Klinke (80) verhindert.

5. Beschlag nach einem der vorhergehenden Ansprüche, **dadurch gekennzeichnet, dass** die Zähne der Klinke (80) geprägt sind.

6. Beschlag nach einem der vorhergehenden Ansprüche, **dadurch gekennzeichnet, dass** wenigstens ein Anschlag (79) am ersten Beschlagteil (11) angeformt oder befestigt ist, welcher mit wenigstens einem Gegenanschlag (84) am dritten Beschlagteil (74) zusammenwirkt, um die Schwenkbewegung des dritten Beschlagteils (74) in eine Schwenkrichtung zu begrenzen.

7. Beschlag nach einem der vorhergehenden Ansprüchen, **dadurch gekennzeichnet, dass** der Umklammerungsring (13) eine im wesentlichen flache Form aufweist.

8. Fahrzeugsitz, insbesondere Kraftfahrzeugsitz, mit wenigstens einem Beschlag nach einem der vorhergehenden Ansprüche, einem Sitzteil (3), welches mit dem zweiten Beschlagteil (12) verbunden ist, und einer Lehne (4), welche mit dem dritten Beschlagteil (74) verbunden ist.

## Claims

1. Fitting for a vehicle seat, in particular for a motor vehicle seat, comprising
a) a first fitting part (11) and a second fitting part (12) which are rotatable relative to one another and are in geared connection with one another,
b) an enclosing ring (13) which axially holds together the first fitting part (11) and the second fitting part (12), forming a disc-shaped unit, and which is fixed to the first fitting part (11) and engages over the second fitting part (12) radially outside, and
c) a third fitting part (74) which is pivotably mounted relative to the first fitting part (11) and which can be locked by means of a toothed pawl (80) with a latching element (75) provided on the first fitting part (11), wherein
d) the toothed latching element (75) is integrally formed on the first fitting part (11) and
e) the first fitting part (11) and the second fitting part (12) are in geared connection with one another by means of a toothed ring (17) formed on the first fitting part (11) and of a toothed wheel (16) formed on the second fitting part (12), said toothed ring and toothed wheel meshing with one another,
**characterized in that**
f) the counter-toothing of the embossed toothed ring (17) on its reverse side serves as latching element (75).

2. Fitting according to Claim 1, **characterized in that** a rotating eccentric (27, 27) which is driven by a driver (21) is provided for driving a relative rolling movement of toothed wheel (16) and toothed ring (17), wherein in particular two wedge segments (27) acted upon by a spring (35) define the eccentric (27, 27).

3. Fitting according to Claim 2, **characterized in that** the first fitting part (11) receives the eccentric (27, 27), in particular by means of a sliding bearing bush (28) which is concentric to the toothed ring (17), and **in that** the second fitting part (12) supports the eccentric (27, 27), in particular by means of a collar (19) which is concentric to the toothed wheel (16).

4. Fitting according to one of the preceding claims, **characterized in that**, in the circumferential direction, a filling piece (117) is provided over a section of the counter-toothing of the toothed ring (17), which filling piece prevents a locking of the pawl (80).

5. Fitting according to one of the preceding claims, **characterized in that** the teeth of the pawl (80) are embossed.

6. Fitting according to one of the preceding claims, **characterized in that** at least one stop (79) is integrally formed or fixed on the first fitting part (11), which stop cooperates with at least one counter-stop (84) on the third fitting part (74) in order to limit the pivoting movement of the third fitting part (74) in one pivoting direction.

7. Fitting according to one of the preceding claims, **characterized in that** the enclosing ring (13) has a substantially flat shape.

8. Vehicle seat, in particular a motor vehicle seat, comprising at least one fitting according to one of the preceding claims, a seat part (3) which is connected to the second fitting part (12), and a backrest (4) which is connected to the third fitting part (74).

## Revendications

1. Ferrure pour un siège de véhicule, en particulier pour un siège de véhicule automobile, comprenant
a) une première partie de ferrure (11) et une deuxième partie de ferrure (12), lesquelles peuvent tourner l'une par rapport à l'autre et sont en liaison par engrenage l'une avec l'autre,
b) une bague de serrage (13), laquelle maintient axialement ensemble la première partie de ferrure (11) et la deuxième partie de ferrure (12) en formant une unité en forme de disque, et laquelle est fixée à la première partie de ferrure (11) et recouvre radialement à l'extérieur la deuxième partie de ferrure (12) et
c) une troisième partie de ferrure (74), laquelle est montée pivotante par rapport à la première partie de ferrure (11) et laquelle peut être verrouillée, au moyen d'un cliquet denté (80), avec un élément d'encliquetage (75) prévu sur la première partie de ferrure (11),
d) l'élément d'encliquetage denté (75) étant formé sur la première partie de ferrure (11) et
e) la première partie de ferrure (11) et la deuxième partie de ferrure (12) étant en liaison par engrenage l'une avec l'autre au moyen d'une couronne dentée (17) réalisée sur la première partie de ferrure (11) et d'une roue dentée (16) réalisée sur la deuxième partie de ferrure (12), lesquelles s'engrènent l'une avec l'autre, **caractérisée en ce que**
f) la contre-denture de la couronne dentée (17) estampée sur sa face arrière sert d'élément d'encliquetage (75).

2. Ferrure selon la revendication 1, **caractérisée en ce qu'**un excentrique périphérique (27, 27) entraîné par un élément d'entraînement (21) est prévu pour l'entraînement d'un déplacement de roulement relatif de la roue dentée (16) et de la couronne dentée (17), deux segments de cale (27) sollicités par un ressort (35) définissant en particulier l'excentrique (27, 27).

3. Ferrure selon la revendication 2, **caractérisée en ce que** la première partie de ferrure (11) reçoit l'excentrique (27, 27), en particulier au moyen d'un coussinet de palier lisse (28) concentrique à la couronne dentée (17), et **en ce que** la deuxième partie de ferrure (12) supporte l'excentrique (27, 27), en particulier au moyen d'un rebord (19) concentrique à la roue dentée (16).

4. Ferrure selon l'une quelconque des revendications précédentes, **caractérisée en ce qu'**une pièce intercalaire (117) est prévue, dans la direction périphérique, sur une région partielle de la contre-denture de la couronne dentée (17), laquelle pièce intercalaire empêche un verrouillage du cliquet (80).

5. Ferrure selon l'une quelconque des revendications précédentes, **caractérisée en ce que** les dents du cliquet (80) sont estampées.

6. Ferrure selon l'une quelconque des revendications précédentes, **caractérisée en ce qu'**au moins une butée (79) est formée ou fixée sur la première partie de ferrure (11), laquelle butée coopère avec au moins une contre-butée (84) sur la troisième partie de ferrure (74), afin de limiter le déplacement de pivotement de la troisième partie de ferrure (74) dans une direction de pivotement.

7. Ferrure selon l'une quelconque des revendications précédentes, **caractérisée en ce que** la bague de serrage (13) présente une forme essentiellement plane.

8. Siège de véhicule, en particulier siège de véhicule automobile, comprenant au moins une ferrure selon l'une quelconque des revendications précédentes, une partie d'assise (3), laquelle est reliée à la deuxième partie de ferrure (12), et un dossier (4), lequel est relié à la troisième partie de ferrure (74).
